# EUROPÄISCHE PATENTSCHRIFT

(11) **EP 3 365 219 B1**
(45) Veröffentlichungstag und Bekanntmachung des Hinweises auf die Patenterteilung: **30.10.2019**
(21) Anmeldenummer: 16765995.2
(22) Anmeldetag: 15.09.2016
(51) Int. Cl.: B62D 1/183

(54) **EIN- UND AUSFAHRBARE LENKUNGSVORRICHTUNG FÜR EIN FAHRZEUG**
EXTENDABLE AND RETRACTABLE STEERING DEVICE FOR A VEHICLE
DISPOSITIF DE DIRECTION POUR VÉHICULE, POUVANT ÊTRE RENTRÉ OU SORTI

(30) Priorität: 21.10.2015 DE 102015220526
(43) Veröffentlichungstag der Anmeldung: 29.08.2018
(73) Patentinhaber: Bayerische Motoren Werke Aktiengesellschaft, 80809 München (DE)
(72) Erfinder: DAUN, Nico, 80639 München (DE); KROES, Sebastian, 80639 München (DE); KÜHN, Victor, 81679 Muenchen (DE); FREIHERR VON FREYBERG, Henri, 80469 München (DE); MITULA, Marek, 81927 München (DE)
(86) Internationale Anmeldenummer: PCT/EP2016/071777
(87) Internationale Veröffentlichungsnummer: WO 2017/067721

(56) Entgegenhaltungen:
- EP-A2- 2 033 875
- DE-A1- 10 347 925
- DE-A1-102013 110 865
- DE-U1-202014 101 156
- FR-A- 1 490 973
- US-A1- 2004 016 588

## Beschreibung

Die Erfindung betrifft eine ein- und ausfahrbare Lenkvorrichtung eines zweispurigen Fahrzeugs nach dem Oberbegriff des Anspruchs 1. Zum Stand der Technik wird neben der DE 10 2006 006 995 A1 und der WO 03/020571 A1 auf die DE 20 2014 101 156 U1 verwiesen. Die letztgenannte Schrift zeigt eine verstaubare Fahrzeug-Lenksäule mit einem sog. Dachhaken zur Befestigung am Armaturenbrett, die weiter als bislang üblich, jedoch in grundsätzlich bekannter Weise verlagert werden kann.

Beim (grundsätzlich bekannten) hochautonomen Fahren eines Fahrzeugs wird ein Lenkrad (als bislang übliche Ausgestaltung einer hier sog. Fahrer-Lenkhandhabe) nicht benötigt. In diesem Fahrmodus kann das Lenkrad in eine sog. Ruheposition in der Instrumententafel des Fahrzeugs zurückverlagert sein, um Raum im Fahrzeug freizugeben. Das solchermaßen gegenüber der üblichen ausgefahrenen Gebrauchsposition, in welcher der Fahrer das Fahrzeug mittels des Lenkrades selbst lenkt, eingefahrene und somit abgelegte Lenkrad dient dabei zusätzlich als Modusanzeige für den autonomen Fahrmodus.

Es ist Aufgabe vorliegender Erfindung, eine Lenkvorrichtung nach dem Oberbegriff des Anspruchs 1 dahingehend weiter zu bilden, dass das Einfahren und Ausfahren der Lenkvorrichtung für den Fahrer möglichst angenehm erfolgt und ihm insbesondere in der eingefahrenen Ruheposition möglichst viel Freiraum verschafft.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Lenkvorrichtung für ein zweispuriges Fahrzeug, insbesondere einen Personenkraftwagen. Die Lenkvorrichtung ist zwischen einer ausgefahrenen (Gebrauchs-)Position und einer eingefahrenen (Ruhe-)Position verlagerbar. In der ausgefahrenen Position wird die Lenkvorrichtung vom Fahrer genutzt, um das Fahrzeug zu lenken. In der eingefahrenen Position ist die Lenkvorrichtung möglichst weit in die Instrumententafel hinein versetzt, um möglichst viel Platz für den Fahrer freizugeben. In der eingefahrenen Position kann die Lenkvorrichtung nicht vom Fahrer genutzt werden. Wenn sich die Lenkvorrichtung in der eingefahrenen Position befindet wird das Fahrzeug entweder autonom gesteuert oder befindet sich im Stillstand. Im Stillstand bietet die eingefahrene Lenkvorrichtung dem Fahrer möglichst viel Freiraum beim Ein- und Aussteigen in das bzw. aus dem Fahrzeug.

Die erfindungsgemäße Lenkvorrichtung weist ein Halteelement für die bzw. eine in der Gebrauchsposition der Lenkvorrichtung vom Fahrer zu bedienende Lenkhandhabe auf. Das Halteelement ist vorzugsweise sowohl in der Ruheposition als auch in der Gebrauchsposition von einer Instrumententafel des Fahrzeugs verdeckt und somit für den Fahrer nicht sichtbar. An dem Halteelement ist die Lenkhandhabe (beispielsweise in Form eines Lenkrads oder in Form von ebenfalls grundsätzlich bekannten Lenkhörnern) drehbar angeordnet. Diese Lenkhandhabe ragt zumindest in der ausgefahrenen Position zum Fahrer hin. Der Fahrer kann die Lenkhandhabe ergreifen und somit das Fahrzeug lenken. Insbesondere ist hierbei eine Stange als Führung der Lenkhandhabe vorgesehen, die drehbar im Halteelement gelagert ist. Die Stange ragt in Richtung des Fahrers. Am Ende der Stange ist das Lenkrad oder sind die Lenkhörner angeordnet. Die erfindungsgemäße Lenkvorrichtung ist vorzugsweise für ein (grundsätzlich bekanntes) steer-by-wire-(Lenk-)System vorgesehen, so dass keine direkte mechanische Verbindung zwischen der Lenkhandhabe und den lenkbaren Rädern des Fahrzeugs bestehen muss.

Das Halteelement ist auf einer Führungsvorrichtung beispielsweise über Wälzlager oder eine Gleitlagerung verlagerbar gelagert. Das Halteelement und mit diesem die Lenkhandhabe können entlang dieser Führungsvorrichtung zwischen der eingefahrenen Ruhe-Position der Lenkvorrichtung und deren ausgefahrener Gebrauchs-Position hin und her bewegt werden.

Falls sich eine solche Führungsvorrichtung lediglich in Fahrzeuglängsrichtung erstreckt, muss relativ viel Bauraum in Fahrzeuglängsrichtung vorgehalten werden, um die Lenkhandhabe soweit als möglich in die Instrumententafel des Fahrzeugs zu versenken. Deshalb ist erfindungsgemäß vorgeschlagen, dass sich die Führungsvorrichtung sowohl in Fahrzeuglängsrichtung als auch in Fahrzeugquerrichtung erstreckt. Dadurch bewegt sich die Lenkhandhabe beim Verfahren in die eingefahrene Position schräg zur Fahrzeuglängsrichtung, und dabei beispielsweise zumindest annähernd in einer Horizontalebene. Dies ermöglicht eine für den Fahrer angenehme, da nicht bedrohlich wirkende Verlagerung der Lenkhandhabe insbesondere beim Verfahren in die Gebrauchsposition, wobei diese Verlagerung relativ zum Fahrer schnell, d.h. sehr kurzfristig erfolgen kann, was insbesondere im Falle einer Beendigung eines hochautonomen Fahrbetriebs sehr vorteilhaft ist.

Bevorzugt umfasst die Lenkvorrichtung einen Antrieb zum Bewegen des Halteelements entlang der Führungsvorrichtung. Der Antrieb ist insbesondere ein Elektromotor. Vorzugsweise befindet sich der Antrieb am Halteelement. Dabei kann eine fahrzeugfeste Zahnstange vorgesehen sein. Am Antrieb befindet sich dann ein Ritzel, das mit der Zahnstange im Eingriff steht. Die Zahnstange verläuft vorzugsweise parallel zur Führungsvorrichtung und kann entweder in die Führungsvorrichtung integriert sein oder neben der Führungsvorrichtung angeordnet sein. Alternativ zu einer Zahnstange kann aber auch ein Riemenantrieb zum Verlagern der Lenkhandhabe mit ihrem Halteelement vorgesehen sein.

Vorteilhafterweise verläuft die Führungsvorrichtung gebogen. Beim Einfahren der Lenkvorrichtung folgt das Halteelement somit bspw. einer Kreisbahn. Dadurch verdreht sich die im Halteelement steckende Stange der Lenkhandhabe gegenüber der Fahrzeuglängsrichtung. Dies wiederum führt zu einer sehr platzsparenden Position der Lenkhandhabe mit Halteelement in der eingefahrenen Position. Mit der gebogenen Ausführung der Führungsvorrichtung sind bevorzugt auch weitere Führungen und Antriebselemente, wie beispielsweise die erwähnte Zahnstange gebogen ausgebildet.

Am Halteelement ist jedenfalls im Falle eines steer-by-wire-Lenksystems ein Lenkwinkelsensor und/oder ein Lenkmomentsensor vorgesehen. Dieser Sensor oder diese Sensoren dient/dienen zum Erfassen eines vom Fahrer an die Lenkhandhabe angelegten Lenkwunsches. Des Weiteren kann sich am Halteelement ein Aktuator befinden, mit welchem eine Stellkraft auf die Lenkhandhabe ausgeübt werden kann. Durch diese Stellkraft verspürt der Fahrer einen entsprechenden Widerstand beim Lenken, d.h. bei der Vorgabe seines Lenkwunsches. Es können der/die genannte(n) Sensor(en) und der Aktuator in einer Baugruppe integriert sein.

Die Bewegung der Lenkvorrichtung beim Verfahren aus der ausgefahrenen Gebrauchs-Position in die eingefahrene Ruhe-Position (oder umgekehrt) lässt sich in eine Längskomponente in Fahrzeuglängsrichtung und eine Querkomponente in Fahrzeugquerrichtung unterteilen. Je nach Ausgestaltung der Führungsvorrichtung ergibt sich dabei eine erste Länge der Längskomponente und eine zweite Länge der Querkomponente. Für eine möglichst effektive Ausnutzung des Bauraums, sind folgende Verhältnisse bevorzugt vorgeschlagen: Die erste Länge liegt vorzugsweise zwischen 50 % und 200 %, insbesondere zwischen 75 % und 150 %, der zweiten Länge. Insbesondere ist vorgesehen, dass innerhalb dieser Werteangaben die Führungsvorrichtung geeignet gebogen verläuft.

Bei einer steer-by-wire Lenkung kann das Fahrzeug mit relativ kleinen Lenkwinkeln gelenkt werden. Deshalb ist hier nicht unbedingt ein Lenkrad notwendig. Vielmehr ist kann vorgesehen sein, dass die Lenkhandhabe wie grundsätzlich bekannt zwei einander (bezüglich der weiter oben genannten und im Halteelement drehbar gelagerten Stange) gegenüberliegende Lenkhörner umfasst. Jeweils ein Lenkhorn wird von einer Hand des Fahrers gegriffen. Durch die Lenkhörner wird insbesondere Bauraum in Fahrzeughochachsrichtung eingespart.

Für eine besonders platzsparende Anordnung der Lenkvorrichtung in der eingefahrenen Position ist bevorzugt vorgesehen, dass die beiden Lenkhörner zueinander beweglich sind. Hierzu ist vorgeschlagen, dass die Lenkhandhabe eine lineare Lenkhornführung umfasst. Entlang dieser Lenkhornführung ist zumindest eines der Lenkhörner verfahrbar. Dadurch ist es möglich, die beiden Lenkhörner beim Einfahren der Lenkvorrichtung aufeinander zu zufahren. Die Lenkhornführung verläuft vorteilhafterweise bei einer Neutralstellung der Lenkhandhabe in Fahrzeugquerrichtung.

Bevorzugt ist ein Lenkhornantrieb zum Bewegen zumindest eines Lenkhorns vorgesehen. Der Lenkhornantrieb ist insbesondere ein Elektromotor. Vorzugsweise ist der Lenkhornantrieb mit einem der Lenkhörner verbunden und steht über ein Ritzel mit einer Lenkhornzahnstange im Eingriff. Alternativ oder zusätzlich zum linearen Verfahren zumindest eines Lenkhorns ist es auch möglich, dass zumindest eines der Lenkhörner eingeklappt werden kann. Auch dadurch ist eine platzsparende Aufbewahrung der Lenkhandhabe möglich.

Vom Fahrzeug bzw. einer elektrischen Energieverteilung des Fahrzeuges sowie von einem Fahrzeug-Datenbus verlaufen Leitungen oder Kabel zur elektrischen Energieübertragung und Informationsübermittlung zur erfindungsgemäßen Lenkvorrichtung bzw. zum Halteelement, insbesondere zu Sensoren, Aktuator(en) und Motor(en). Diese Leitungen oder Kabel sind vorzugsweise in einer Kabelführung aufgenommen. Die Kabelführung ist bevorzugt gegenüber dem Fahrzeug schwenkbar angeordnet. Beim Verfahren des Halteelements für die Lenkhandhabe schwenkt die Kabelführung mit.

Was die Anordnung einer erfindungsgemäßen Lenkvorrichtung bezüglich einer Armaturentafel oder Instrumententafel des Fahrzeugs betrifft, so sind die Führungsvorrichtung und das Halteelement hinter der Instrumententafel, also auf der vom Fahrer abgewandten Seite der Instrumententafel, angeordnet. Das Lenkhandhabe ist in der eingefahrenen Position, gegebenenfalls mit Ausnahme der Lenkhörner, im Wesentlichen in oder hinter der Instrumententafel platziert. In der eingefahrenen Position ragt höchstens zumindest eines der Lenkhörner etwas über die Oberfläche der Instrumententafel zum Fahrer hingerichtet hinaus. Alle anderen Elemente der Lenkvorrichtung sind in der eingefahrenen Position bevorzugt hinter der Instrumententafel versenkt.

An der Lenkhandhabe, bspw. in der Mitte zwischen den beiden Lenkhörnern, befindet sich vorzugsweise eine Betätigungseinheit. Durch Drücken oder Berühren dieser Betätigungseinheit bewegt sich das Halteelement mit Lenkhandhabe in die eingefahrene Position. Vorzugsweise kann gleichzeitig mit dem Berühren oder Drücken der Betätigungseinheit das Fahrzeug in den autonomen Fahrmodus wechseln. Beispielsweise kann die Betätigungseinheit in ein dort vorgesehenes Emblem des Fahrzeugherstellers integriert sein.

Weitere Einzelheiten, Merkmale und Vorteile der Erfindung ergeben sich aus der nachfolgenden Beschreibung und den Figuren. Es zeigen:
Figur 1 und 2 unterschiedliche Ansichten eines Ausführungsbeispiels einer erfindungsgemäßen Lenkvorrichtung,
Figur 3 diese Lenkvorrichtung in der ausgefahrenen Gebrauchs-Position, und
Figur 4 diese Lenkvorrichtung in der eingefahrenen Ruhe-Position.

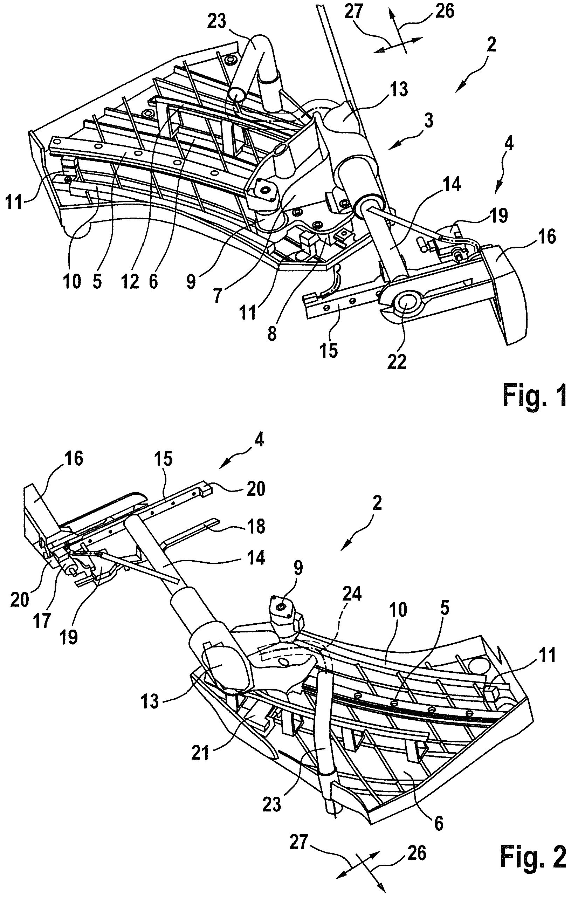

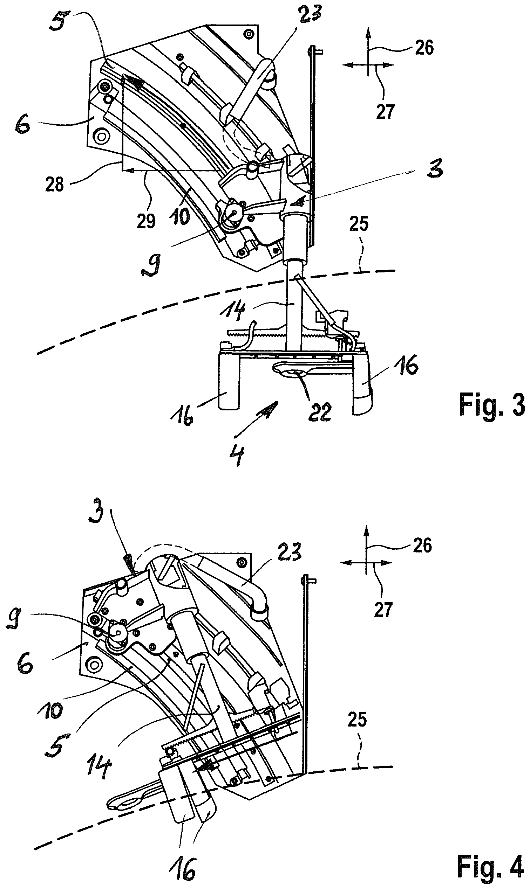

Die Figuren 1 und 2 zeigen zwei unterschiedliche Ansichten einer erfindungsgemäßen einfahrbaren und ausfahrbaren Lenkvorrichtung 2 eines Fahrzeugs. Das Fahrzeug selbst ist nicht dargestellt. Allerdings sind eine Fahrzeuglängsrichtung 26 und eine Fahrzeugquerrichtung 27 eingezeichnet. Zusätzlich zeigen die Figuren 3 und 4 rein schematisch in der Draufsicht einen dem Fahrer zugewandten Abschluss einer Instrumententafel 25. Eine Grundplatte 6 der Lenkvorrichtung 2 nimmt die fahrzeugfesten Bestandteile auf. Die Grundplatte 6 kann auch integraler Bestandteil weiterer Fahrzeugteile sein.

Die Lenkvorrichtung 2 umfasst ein Halteelement 3 und eine drehbar über eine Stange 14 im Halteelement 3 gelagerte Lenkhandhabe 4 für den Fahrer des Fahrzeugs. Des Weiteren ist eine Führungsvorrichtung 5 vorgesehen. Die Führungsvorrichtung 5 ist als gekrümmt verlaufende Führungsschiene ausgebildet. Die Führungsvorrichtung 5 ist auf der Grundplatte 6 montiert.

Das Halteelement 3 umfasst einen Haltebock 7. Dieser Haltebock 7 ist über einen Schlitten 8 auf der Führungsvorrichtung 5 beweglich, d.h. längs bzw. auf der genannten Führungsschiene verlagerbar angeordnet. Für eine solche Verlagerung umfasst die Lenkvorrichtung 2 einen Antrieb 9, ausgebildet als Elektromotor. Der Antrieb 9 ist Bestandteil des Halteelementes 3 und ist am Haltebock 7 montiert.

Parallel zur Führungsvorrichtung 5 verläuft eine auf der Grundplatte 6 montierte Zahnstange 10. Der Antrieb 9 weist ein Ritzel auf, das mit der Zahnstange 10 im Eingriff steht. Über zwei Endanschlagssensoren 11 kann die Position des Halteelements 3 in der eingefahrenen und ausgefahrenen Endposition der Lenkhandhabe 4 erfasst werden. Zur exakten Führung des Halteelements 3 ist eine weitere Führung 12 vorgesehen. Die weitere Führung 12 ist insbesondere als Führungskulisse ausgebildet. Die weitere Führung 12 umfasst eine Nut. Diese Nut ist bezüglich der Grundplatte 6 fest. Am Halteelement 3 ist ein nicht gezeigter Stift angeordnet, der in der Nut geführt ist. Vorliegend ist die Führungsvorrichtung 5 dabei zwischen der weiteren Führung 12 und der Zahnstange 10 liegend vorgesehen.

In dem Haltebock 7 ist die Lenkhandhabe 4 drehbar gelagert. Hierzu umfasst die Lenkhandhabe 4 eine Stange 14. Die Stange 14 steckt im Haltebock 7. Im Haltebock 7 ist ein Lenkwinkelsensor 13 angeordnet. Dieser Lenkwinkelsensor 13 erfasst die Drehung der Stange 14. Des Weiteren befindet sich im Haltebock 7 ein Aktuator zum Erzeugen einer Stellkraft auf die Stange 14.

Auf der dem Fahrer zugewandten Seite der Stange 14 umfasst die Lenkhandhabe 4 zwei Lenkhörner 16 (vgl. insbesondere Fig.3). Diese beiden Lenkhörner 16 werden, anstatt eines herkömmlichen Lenkrades, vom Fahrer gegriffen. Im gezeigten Ausführungsbeispiel ist das dem (zur rechten Seite des Fahrers sitzenden) Beifahrer zugewandte Lenkhorn 16 linear beweglich. Das weitere Lenkhorn 16 ist in den Figuren 1 und 2 der Übersichtlichkeit halber nicht dargestellt. Das Lenkhandhabe 4 umfasst weiterhin eine lineare Lenkhornführung 15. Die lineare Lenkhornführung 15 erstreckt sich, in Neutralstellung des Lenkhandhabe 4 in Fahrzeugquerrichtung 27. Auf dieser Lenkhornführung 15 ist das Lenkhorn 16 (oder sind die Lenkhörner 16) linear verfahrbar. Hierzu ist ein Lenkhornantrieb 17, ausgebildet als Elektromotor vorgesehen. Der Lenkhornantrieb 17 ist fest mit dem vorliegend einzigen verfahrbaren (und in den Figuren 1, 2 figürlich dargestellten) Lenkhorn 16 verbunden. Der Lenkhornantrieb 17 umfasst ein Ritzel. Dieses Ritzel steht im Eingriff mit einer Lenkhornzahnstange 18. Die Lenkhornzahnstange 18 verläuft parallel zur Lenkhornführung 15. Zwei Lenkhornendanschläge 20 ermöglichen das Erfassen der Position des beweglichen Lenkhorns 16. Des Weiteren umfasst das Lenkhandhabe 4 eine Lenkhornarretierung 19. Diese Lenkhornarretierung 19 fixiert das bewegliche Lenkhorn 16 gegenüber der Lenkhornführung 15 oder gegenüber der Lenkhornzahnstange 18. Dadurch ist in ausgefahrener Position der Lenkvorrichtung 2 sichergestellt, dass sich die beiden Lenkhörner 16 nicht relativ zueinander bewegen.

Vom Fahrzeug zum Halteelement 3 und vom Halteelement 3 zur Lenkhandhabe 4 führen der Bereitstellung von elektrischer Energie sowie der Signalübermittlung dienende Leitungen oder Kabel 24. Die Lenkvorrichtung1 umfasst eine schwenkbare Kabelführung 23 für die zum Halteelement 3 geführten Kabel 24. Die schwenkbare Kabelführung 23 ist schwenkbar gegenüber der Grundplatte 6 gelagert. Beim Verfahren der Lenkvorrichtung 2 schwenkt die Kabelführung 23 mit.

Figur 3 zeigt die Lenkvorrichtung 2 in der ausgefahrenen Gebrauchs-Position. In dieser Stellung kann der Fahrer die beiden Lenkhörner 16 greifen und das Fahrzeug entsprechend manuell steuern.

Das Lenkhandhabe 4 umfasst in der Mitte zwischen den beiden Lenkhörnern 16 eine Betätigungseinheit 22. Diese Betätigungseinheit 22 ist in das Emblem des Fahrzeugherstellers integriert. Durch Berühren oder Drücken dieser Betätigungseinheit 22 werden der Antrieb 9 und der Lenkhornantrieb 17 aktiviert und die Lenkvorrichtung 2 fährt in die eingefahrene Position. Diesen Zustand zeigt Figur 4.

In der eingefahrenen Ruhe-Position nach Figur 4 befindet sich die Lenkvorrichtung 2 fast vollständig hinter der Instrumententafel 25. Lediglich ein Teil der Lenkhörner 16 ragt über die Instrumententafel 25. Hier erkennt man unter anderem, dass das in Fig.3 rechtsseitige Lenkhorn 16 zum linksseitigen Lenkhorn 16 hin verlagert ist. Ferner erkennt man - da in den Figuren 3, 4 die Lenkvorrichtung 2 für ein Fahrzeug mit (im Fahrzeug) linksseitigem Fahrerplatz im wesentlichen in Draufsicht (in Richtung Fahrbahn) gezeigt ist, dass die Krümmung der Führungsvorrichtung im wesentlichen horizontal zur dem Fahrer nächstliegenden Fahrzeug-Außenseite hin gerichtet ist, d.h. beim einem Fahrzeug mit linksseitigem Fahrerplatz nach links vorne hin gekrümmt ist.

Anhand von Figur 3 und 4 ist gut zu sehen, dass sich die Führungsvorrichtung 5 bogenförmig sowohl in Fahrzeuglängsrichtung 26 als auch in Fahrzeugquerrichtung 27 erstreckt. Die entsprechende Bewegung kann unterteilt werden in eine Längskomponente 28 und eine Querkomponente 29. Durch die gebogene Bewegung erfolgt ein Schwenken der Stange 14 gegenüber der Fahrzeuglängsrichtung 26. Durch entsprechende Ausgestaltung der Längen der Längskomponente 28 und Querkomponente 29 kann der Bauraum innerhalb der Instrumententafel 25 optimal ausgenutzt werden; ferner wirkt für den Fahrer insbesondere das Herausfahren der Lenkhandhabe 4 aufgrund der gekrümmten Bahn weniger bedrohlich als wenn die Lenkhandhabe direkt zum ihm hinbewegt würde.

## Patentansprüche

1. Lenkvorrichtung (2) eines zweispurigen Fahrzeugs, mit einem Halteelement (3) und in einer in diesem drehbar gelagerten Lenkhandhabe (4) für den Fahrer, sowie mit einer Führungsvorrichtung (5) für das Halteelement (3), längs derer das Halteelement (3) zwischen einer in Fahrzeuglängsrichtung zum Fahrer hin ausgefahrenen Gebrauchsposition und einer eingefahrenen vom Fahrer weiter entfernten Ruheposition verfahrbar ist,
**dadurch gekennzeichnet, dass** sich die Führungsvorrichtung (5) in Fahrzeuglängsrichtung (26) und in Fahrzeugquerrichtung (27) erstreckt und damit gebogen verläuft, so dass sich die Lenkhandhabe oder eine führende Stange der Lenkhandhabe beim Verfahren schräg zur Fahrzeuglängsrichtung bewegt.

2. Lenkvorrichtung nach Anspruch 1, **gekennzeichnet durch** einen Antrieb (9) am Halteelement (3), mit Hilfe derer das Halteelement (3) entlang der Führungsvorrichtung (5) verfahrbar ist.

3. Lenkvorrichtung nach einem der vorhergehenden Ansprüche, wobei die Führungsvorrichtung (5) in einer annähernd horizontalen Ebene gebogen verläuft.

4. Lenkvorrichtung nach einem der vorhergehenden Ansprüche, wobei sich eine Bewegung der Lenkvorrichtung (2) von der Gebrauchsposition bis in die Ruheposition aus einer in Fahrzeuglängsrichtung (26) gerichteten Längskomponente (28) mit einer ersten Länge und einer in Fahrzeugquerrichtung (27) gerichteten Querkomponente (29) mit einer zweiten Länge zusammensetzt, und wobei die erste Länge zwischen 50 % und 200 %, vorzugsweise zwischen 75 % und 150 %, der zweiten Länge liegt.

5. Lenkvorrichtung nach einem der vorhergehenden Ansprüche, **gekennzeichnet durch** einen Lenkwinkelsensor (13) am Halteelement (5) zum Erfassen einer an der Lenkhandhabe (4) aufgebrachten Lenkbewegung.

6. Lenkvorrichtung nach einem der vorhergehenden Ansprüche, wobei die Lenkhandhabe (4) zwei vom Fahrers mit seinen beiden Händen ergreifbare Lenkhörner (16) umfasst, welche relativ zueinander bewegbar sind.

7. Lenkvorrichtung nach Anspruch 6, wobei die Lenkhandhabe (4) eine lineare Lenkhornführung (15) umfasst, entlang derer zumindest eines der Lenkhörner (16) verfahrbar ist.

8. Lenkvorrichtung nach einem der Ansprüche 6 oder 7, **dadurch gekennzeichnet, dass** das Lenkhandhabe (4) einen Lenkhornantrieb (17) zum Bewegen zumindest eines Lenkhorns (16) umfasst.

9. Lenkvorrichtung nach einem der vorhergehenden Ansprüche, **gekennzeichnet durch** eine Kabelführung (23), durch die zumindest ein Kabel (24) vom Fahrzeug zum Halteelement (3) geführt ist, wobei die Kabelführung (23) am Fahrzeug schwenkbar angeordnet ist, um beim Verfahren der Lenkvorrichtung (2) zu schwenken.

10. Lenkvorrichtung nach einem der vorhergehenden Ansprüche in einer Instrumententafel (25) des Fahrzeugs, wobei die Führungsvorrichtung (5) und das Halteelement (3) von der Instrumententafel (25) verdeckt angeordnet sind und wobei sich die Lenkhandhabe (4) in der Ruheposition der mit Ausnahme der weiterhin sichtbaren Lenkhörner (16) innerhalb der Instrumententafel (25) befindet.

## Claims

1. A steering device (2) of a two-track vehicle, with a retaining element (3) and a steering handle (4) for the driver that is rotatably mounted in said retaining element, and also with a guide device (5) for the retaining element (3), along which the retaining element (3) is displaceable between a usage position, deployed toward a driver in a vehicle longitudinal direction, and a retracted rest position, further away from the driver,
**characterised in that** the guide device (5) extends in the vehicle longitudinal direction (26) and in the vehicle transverse direction (27) and thus runs in a curved manner, such that the steering handle or a guiding rod of the steering handle moves at an incline to the vehicle longitudinal direction during displacement.

2. A steering device according to claim 1, **characterised by** a drive (9) on the retaining element (3), with the aid of which the retaining element (3) is displaceable along the guide device (5).

3. A steering device according to either one of the preceding claims, wherein the guide device (5) runs in a curved manner in an approximately horizontal plane.

4. A steering device according to any one of the preceding claims, wherein a movement of the steering device (2) from the usage position into the rest position is composed of a longitudinal component (28) directed in the vehicle longitudinal direction (26) with a first length and a transverse component (29) directed in the vehicle transverse direction (27) with a second length, and wherein the first length is between 50% and 200%, preferably between 75% and 150%, of the second length.

5. A steering device according to any one of the preceding claims, **characterised by** a steering angle sensor (13) on the retaining element (5) for detecting a steering movement applied to the steering handle (4).

6. A steering device according to any one of the preceding claims, wherein the steering handle (4) comprises two steering horns (16) which can be grasped by the driver with both hands, which steering horns are movable relative to each other.

7. A steering device according to claim 6, wherein the steering handle (4) has a linear steering horn guide (15), along which at least one of the steering horns (16) is displaceable.

8. A steering device according to either one of claims 6 or 7, **characterised in that** the steering handle (4) comprises a steering horn drive (17) for moving at least one steering horn (16).

9. A steering device according to any one of the preceding claims, **characterised by** a cable guide (23), through which at least one cable (24) is routed from the vehicle to the retaining element (3), wherein the cable guide (23) is pivotably arranged on the vehicle in order to pivot when the steering device (2) is displaced.

10. A steering device according to any one of the preceding claims in an instrument panel (25) of the vehicle, wherein the guide device (5) and the retaining element (3) are arranged such that they are concealed by the instrument panel (25), and wherein in the rest position the steering handle (4), with the exception of still visible steering horns (16), is located within the instrument panel (25).

## Revendications

1. Dispositif de direction (2) d'un véhicule à deux lignes de roues comprenant un élément de retenue (3) et une commande de direction (4) pour le conducteur, montée mobile en rotation dans celui-ci ainsi qu'un dispositif de guidage (5) de l'élément de retenue (3) le long duquel l'élément de retenue (3) peut être déplacé entre une position d'utilisation déployée dans la direction longitudinale du véhicule vers le conducteur et une position de repos repliée plus éloignée du conducteur,
**caractérisé en ce que**
le dispositif de guidage (5) s'étend dans la direction longitudinale du véhicule (26) et dans la direction transversale du véhicule (27) et ainsi selon une courbe de sorte que la commande de direction ou une tige de guidage de la commande de direction se déplace obliquement par rapport à la direction longitudinale du véhicule d'une manœuvre.

2. Dispositif de direction conforme à la revendication 1,
**caractérisé par**
un entraînement (9) situé sur l'élément de retenue à l'aide duquel l'élément de retenu (3) peut être déplacé le long du dispositif de guidage (5).

3. Dispositif de direction conforme à l'une des revendications précédentes,
dans lequel le dispositif de guidage (5) s'étend en courbe dans un plan essentiellement horizontal.

4. Dispositif de direction conforme à l'une des revendications précédentes,
dans lequel un déplacement du dispositif de direction (2) de la position de fonctionnement à la position de repos est constitué par l'association d'une composante longitudinale (28) orientée dans la direction longitudinale (26) du véhicule et ayant une première longueur et d'une composante transversale (29) orientée dans la direction transversale (27) du véhicule et ayant une seconde longueur, la première longueur étant comprise entre 50% et 200% de préférence entre 75% et 150% de la seconde longueur.

5. Dispositif de direction conforme à l'une des revendications précédentes,
**caractérisé par**
un capteur d'angle de direction (13) situé sur l'élément de retenue (5) pour permettre de détecter un mouvement de direction appliqué à la commande de direction (4).

6. Dispositif de direction conforme à l'une des revendications précédentes,
dans lequel la commande de direction (4) comprend deux avertisseurs de direction (16) pouvant être saisis par le conducteur avec ses deux mains et qui sont mobiles l'un par rapport à l'autre.

7. Dispositif de direction conforme à la revendication 6,
dans lequel la commande de direction (4) comporte un guidage d'avertisseur de direction linéaire (15) le long duquel au moins l'un des avertisseurs de direction (16) peut être déplacé.

8. Dispositif de direction conforme à l'une des revendications 6 ou 7,
**caractérisé en ce que**
la commande de direction (4) comporte un entraînement d'avertisseur de direction (17) permettant de déplacer au moins un avertisseur de direction (16).

9. Dispositif de direction conforme à l'une des revendications précédentes,
**caractérisé par**
un guidage de câble (23) au travers duquel au moins un câble (24) est transféré du véhicule vers l'élément de retenue (3), le guidage de câble (23) étant monté pivotant sur le véhicule de façon à pouvoir pivoter lors d'un déplacement du dispositif de direction (2).

10. Dispositif de direction conforme à l'une des revendications précédentes,
situé dans le tableau de bord (25) du véhicule, le dispositif de guidage (5) et l'élément de retenue (3) étant recouverts par le tableau de bord (25), et dans la position de repos la commande de direction (4) étant située à la partie interne du tableau de bord (25) à l'exception des avertisseurs de direction (16) qui sont encore visibles.
